# EUROPEAN PATENT SPECIFICATION

(11) **EP 2 714 466 B1**
(45) Date of publication and mention of the grant of the patent: **13.03.2019**
(21) Application number: 12726827.4
(22) Date of filing: 28.05.2012
(51) Int. Cl.: B60N 2/42

(54) **A SACRIFICIAL HINGE FOR A SEAT FOR A VEHICLE**
OPFERGELENK FÜR EINEN FAHRZEUGSITZ
ARTICULATION SACRIFICIELLE POUR UN SIÈGE DE VÉHICULE

(30) Priority: 26.05.2011 GB 201109040
(43) Date of publication of application: 09.04.2014
(73) Proprietor: SDD International Limited, Brentwood Essex CM14 4EG (GB)
(72) Inventor: MARSHALL, Neal, Solihull West Midlands B91 1JX (GB)
(74) Representative: Jones, Graham Henry
(86) International application number: PCT/GB2012/000476
(87) International publication number: WO 2012/160341

(56) References cited:
- EP-A1- 2 127 941
- WO-A1-2006/093644
- DE-A1-102007 056 373
- US-A1- 2004 061 364
- US-A1- 2010 270 836
- US-B1- 7 938 485

## Description

This invention relates to a hinge and, more especially, this invention relates to a sacrificial hinge for a seat for a vehicle, for example a land vehicle or an aircraft.

In many areas of the world, there are conflicts in which mines are used. The mines may be purpose built mines or improvised explosive devices. If a mine explodes underneath a land vehicle, persons seated in seats in the vehicle often suffer injury. The injury may be from the initial blast from the mine, and/or from forces on seats when the vehicle turns to ground after having been blown off the ground.

Persons also suffer injuries when aircraft, for example helicopters and aeroplanes, crash. The injuries may result from forces on the seats on which the persons are sitting when the helicopter or aeroplane strikes the ground.

US 7938485 B1 shows a sacrificial hinge comprising all the features of the preamble of claim 1. It is an aim of the present invention to reduce the above mentioned problems.

Accordingly, in one non-limiting embodiment of the present invention there is provided a sacrificial hinge for a seat for a vehicle:
(a) the seat comprising a seat portion and a backrest portion;
(b) the sacrificial hinge comprising:
   (i) first securing means for securing to the seat portion;
   (ii) second securing means for securing to the backrest portion;
   (iii) pivot means for enabling the first securing means to pivot with respect to the second securing means;
   (iv) deformable means which is for deforming consequent upon the vehicle receiving a blast from a mine, with the deformation enabling the first securing means to move with respect to the second securing means; and
   (v) control means for controlling the movement of the first securing means with respect to the second securing means; and
(c) the sacrificial hinge being such that:
   (vi) the first securing means pivots with respect to the second securing means about the pivot means in order to allow in use the seat portion to pivot between a horizontal use position and a vertical non-use position;
   (vii) the deformable means deforms as a result of forces applied to the sacrificial hinge;
   (viii) the deformation of the deformable means enables the seat portion to move downwardly with respect to the backrest portion; and
   (ix) the downwards movement of the seat portion with respect to the backrest portion is controlled by the control means, wherein the deformable means is an apertured lattice member; and the deformable means are located in a housing.

The sacrificial hinge of the present invention thus enables the seat portion of the seat to move downwardly and absorb at least some of the forces applied to the hinge, and therefore the seat, for example due to a land vehicle having been subjected to a mine blast or to an aircraft crash landing. This absorption of at least some of the forces may result in reduced injuries, or injuries of reduced severity, to an occupant of the seat.

The sacrificial hinge is one in which the deformable means is an apertured member. Other types of deformable means may be employed.

When the deformable means is an apertured member, then the apertured member is a lattice member. Other types of apertured members may be employed so that, for example, the apertured member may be a honeycomb member.

The deformable means is located in a housing.

The control means may be a hook and catch pin arrangement.

The hook of the hook and catch pin arrangement may be formed by an open slot formation in the first securing means. The catch pin of the hook and catch pin arrangement may be located in the second securing means.

The first securing means may comprise a pair of brackets which sandwich between them the second securing means. Other types of first securing means may be employed.

The second securing means may be a plate member. Other types of second securing means may be employed.

The sacrificial hinge may include retention means for preventing unwanted deformation of the deformable means, for example from accidentally deploying during everyday loads, for example suspension input loads or pot hole breaking loads. The retention means may be a retention clip or other device.

The present invention also extends to a seat when provided with the sacrificial hinge.

The seat may include biasing means for biasing the sacrificial hinge to a position in which in use the seat portion is in the vertical non-use position. The biasing means may be a coil spring. One end of the coil spring may locate on the catch pin of the hook and catch pin arrangement. Other types of biasing means may be employed.

An embodiment of the invention will now be described solely by way of example and with reference to the accompanying drawings in which:

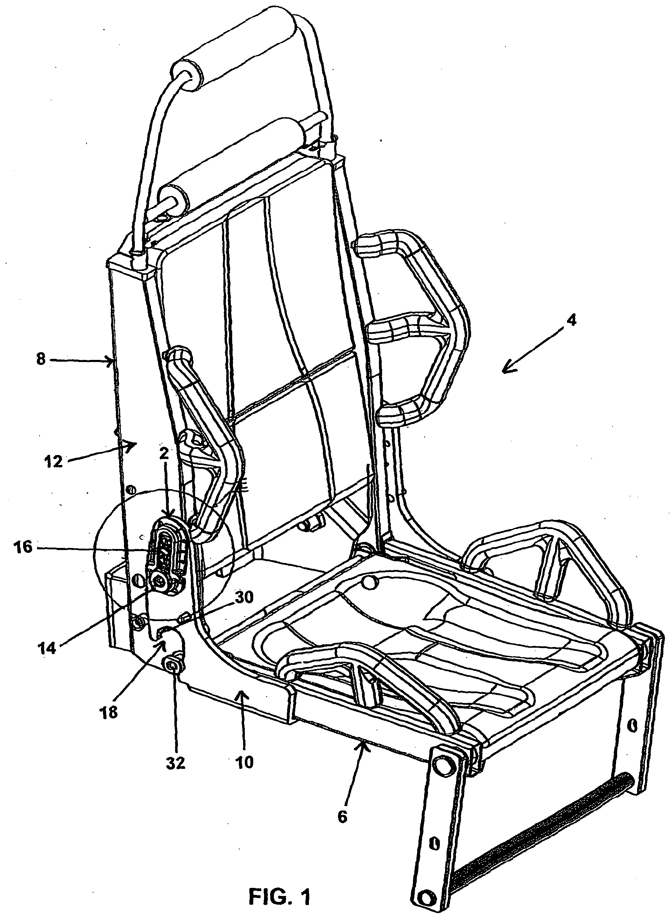

Figure 1 is a perspective view of the sacrificial hinge on a seat for a land vehicle;

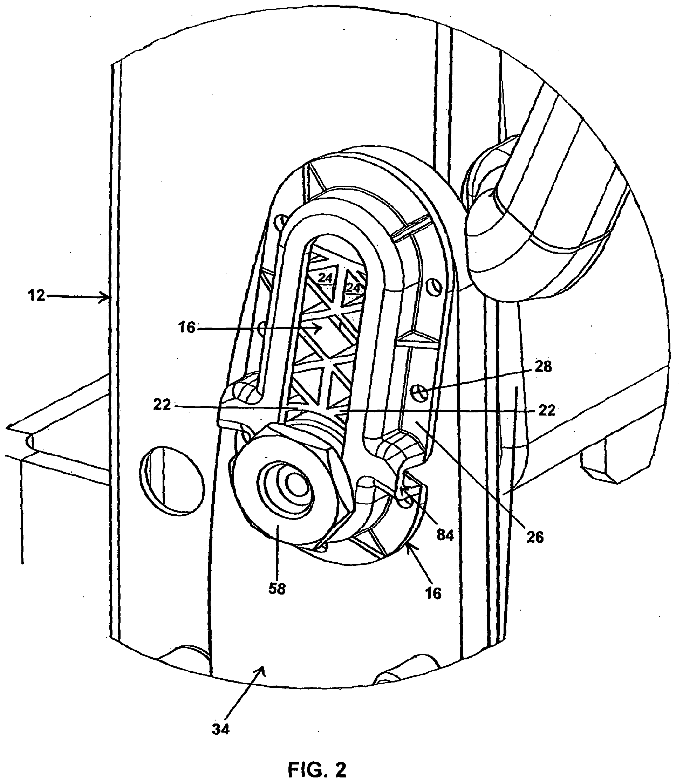

Figure 2 is an enlarged view of the sacrificial hinge as shown in Figure 1;

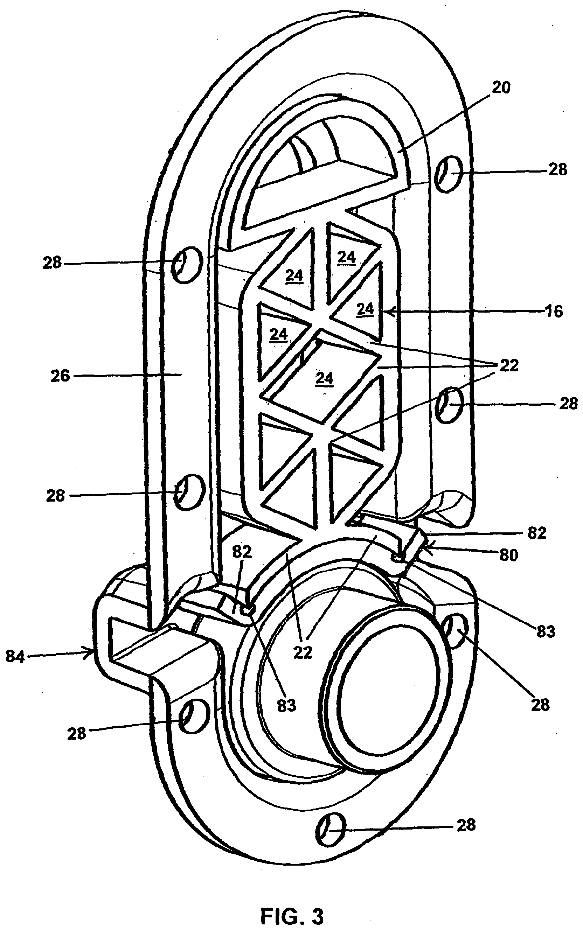

Figure 3 shows the opposite side of the sacrificial hinge to that shown in Figures 1 and 2;
Figure 4 shows the sacrificial hinge of Figure 1 but viewed slightly from the rear, and with a spring located against the sacrificial hinge, and with the sacrificial hinge being in a non-deployed condition;
Figure 5 is a view similar to Figure 4 but shows the sacrificial hinge in a deployed position;
Figure 6 is a cross section through the sacrificial hinge and the spring as shown in Figure 4; and
Figure 7 is an exploded view of the sacrificial hinge and the spring as shown in Figure 4.

Referring to the drawings, there is shown a sacrificial hinge 2 for a seat 4 for a vehicle. The seat 4 comprises a seat portion 6 and a backrest portion 8.

The sacrificial hinge 2 comprises first securing means 10 for securing to the seat portion 6. The sacrificial hinge 2 also comprises second securing means 12 for securing the backrest portion 8. Pivot means 14 enables the first securing means 10 to pivot with respect to the second securing means 12.

The sacrificial hinge 2 includes deformable means 16 which is for deforming consequent upon the vehicle receiving a blast from a mine, with the deformation enabling the first securing means 10 to move with respect to the second securing means 12.

The sacrificial hinge 2 also comprises control means 18 for controlling the movement of the first securing means 10 with respect to the second securing means 12.

The sacrificial hinge 2 is such that the first securing means 10 pivots with respect to the second securing means 12 about the pivot means 14 in order to allow in use the seat portion 6 to pivot between a horizontal use position and a vertical non-use position.

The sacrificial hinge 2 is also such that the deformable means 16 deforms as a result of forces applied to the sacrificial hinge 2, for example as a result of initial forces from the mine blast and/or as a result of forces occurring when the vehicle returns to the ground after having been blown off the ground by the mine blast. The deformation of the deformable means 16 enables the seat portion 6 to move downwardly with respect to the backrest portion. The downwards movement of the seat portion 6 with respect to the backrest portion 8 is controlled by the control means 18.

The deformable means 16 is an apertured member in the form of a lattice member as shown. The lattice member has a head portion 20 and arms 22 which are formed to define apertures 24. The deformable means 16 is located in a housing 26. The housing 26 has apertures 28 for enabling the housing 26 to be fixed in position.

The control means 18 is a hook and catch pin arrangement. The hook and catch pin arrangement comprises a hook 30 which is formed by an open slot formation in the first securing means 10. The catch pin is a catch pin 32 which is located on the second securing means 12.

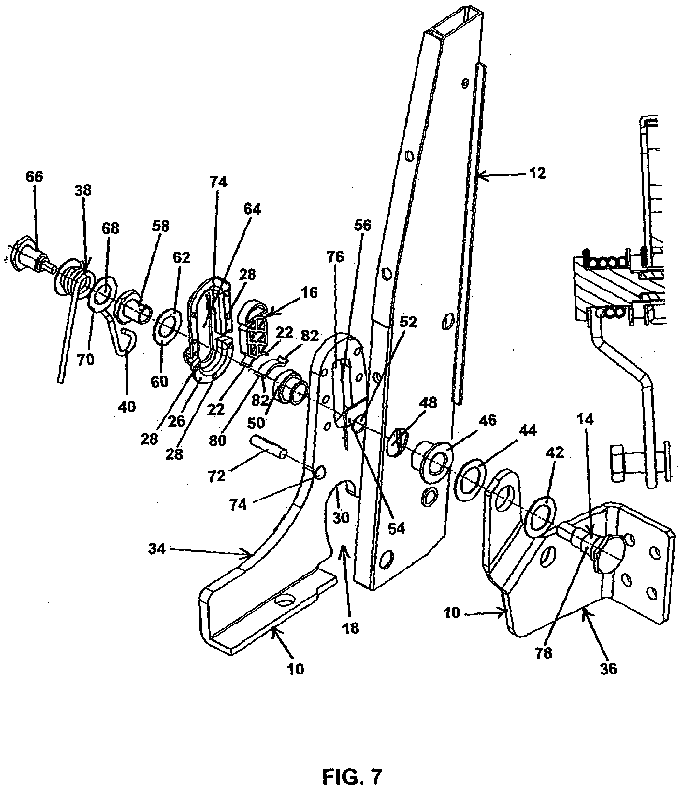

As shown in Figure 7, the first securing means 10 comprises a pair of brackets 34, 36 which are shaped as shown. The brackets 34, 36 sandwich between them the second securing means 12. The second securing means 12 is in the form of a plate member.

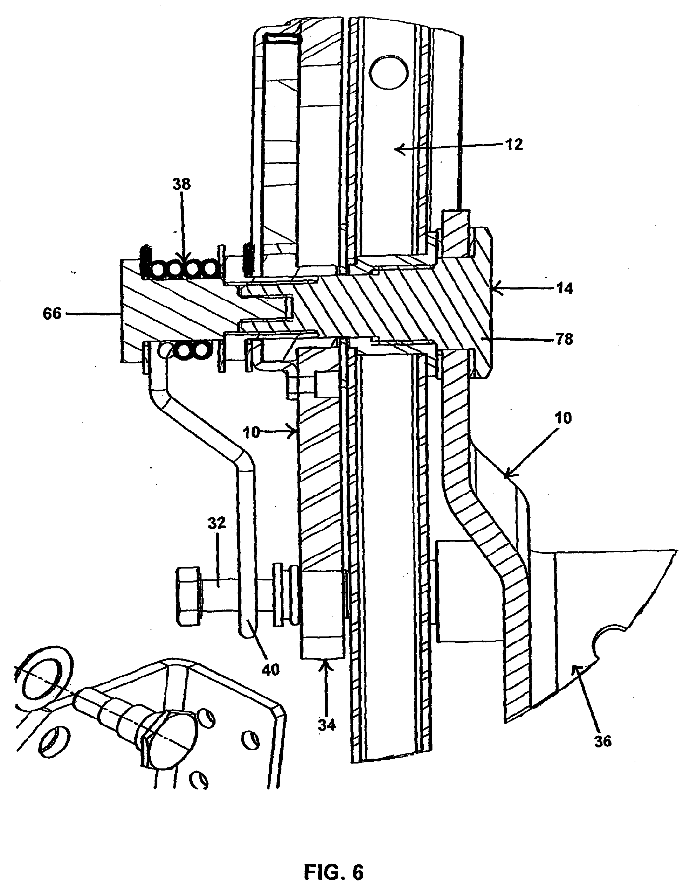

The seat 4 includes biasing means in the form of a coil spring 38. The coil spring 38 is for biasing the seat portion 6 to a vertical non-use position. One end of the coil spring 38 terminates in a hook 40 which locates on the catch pin 32 as shown in Figure 6.

The seat 4 is such that the bracket 36 is sandwiched between washers 42, 44. A guide bush 46 extends through an aperture 48 in the second securing means 12. The guide bush 50 extends through an aperture 52 in a washer 54 and through a closed slot 56 in the bracket 34.

A guide bush 58 extends through an aperture 60 in a washer 62. The guide bush 58 then extends through a closed slot 64 in the housing 26 and between the ends of the arms 22 to enter the guide bush 50. A locking pivot pin member 66 extends though the coil spring 38, through an aperture 68 in a washer 70, and into the guide bush 58.

A pin 72 extends through an aperture 74 in the first securing means 10.

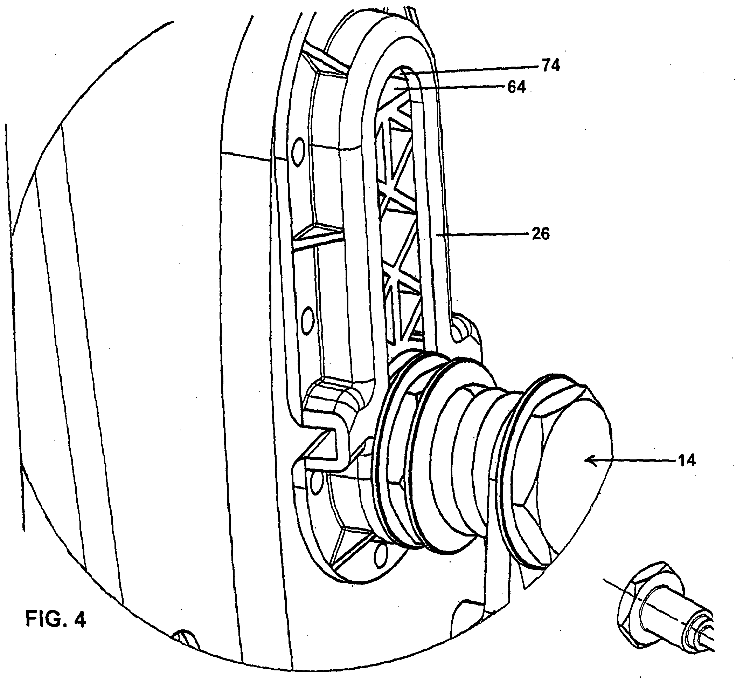

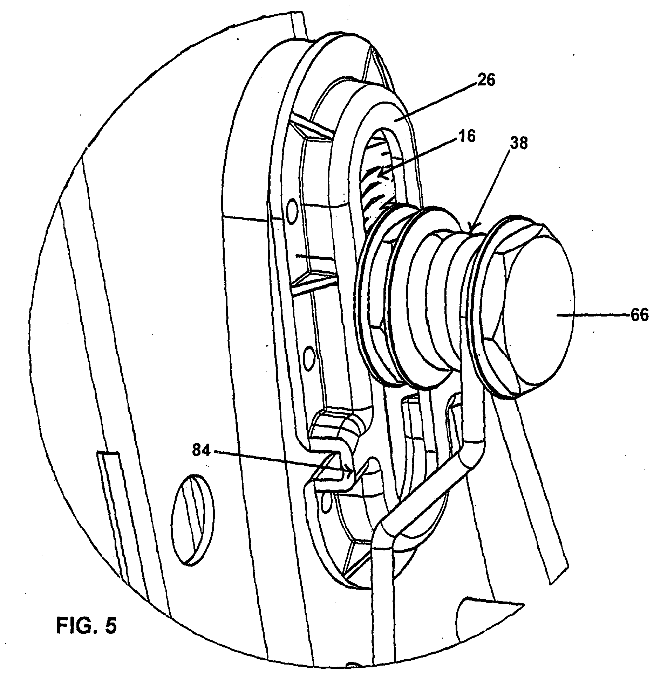

A comparison of Figure 4 and 5 shows how the deformable means 16 operates. In Figure 4, it will be seen that the pivot means 14 is at the bottom of the closed slot 64 in the housing 26, and is therefore also at the bottom of the closed slot 56 in the bracket 34. If a vehicle containing the seat 4 with the sacrificial hinge 2 is blown up by a mine, then the blast from the mine may cause forces to be applied to the sacrificial hinge 2 which will cause the deformable means 16 to deform as shown in Figure 5. The seat portion 6 of the seat 4 will then move downwardly with respect to the backrest portion 8. This will be permitted by the deformable means 16 deforming from the condition shown in Figure 4 to the condition shown in Figure 5. The deformation permits the upper end 74 of the closed slot 64 and the upper end 74 of the closed slot 56 to move downwardly with respect to the pivot pin member 66 and its associated pivot pin member 78, which both form part of the pivot means 14. Some or all of the force on the seat 4 and therefore on the occupant of the seat 4 is thus able to be mitigated by the controlled deformation of the deformable means 16. Injuries may be avoided or reduced by the deformation of the deformable means 16.

The deformable means 16 deforms under the control of the control means 18. Thus the deformable means 16 deforms in a controlled way to move the seat portion 6 and its occupant downwardly, but with the downwards movement never being free to move off in any direction because the downwards movement is controlled and arrested by the hook and catch pin arrangement formed by the hook 20 and the catch pin 32.

In order to stop the deformable means 16 from accidentally deploying during everyday loads, for example suspension input loads and pot hole breaking loads, a retention clip 80 is employed. The retention clip 80 blocks out the deformable means 16 and thus prevents unwanted accidental operation of the sacrificial hinge 2. The retention clip 80 still permits a rotary motion omitting the required pivoting for the seat portion 6 to pivot from its horizontal use position to its vertical non-use position. The retention clip 80 is designed to break by snapping at its upturned ends 82. Breaking may be at any suitable and desired load, for example of a load of about more than 600Kg or 6g. The ends of the arms 22 may sit in grooves 83 on the retention clip 80. Alternatively, the grooves 83 may be omitted.

The housing 26 contains two evacuation shoots 84 that permit the small parts of the broken retention clip 80 to fall away and stop the sacrificial hinge 2 from jamming.

In the seat 4, the coil spring 38, the hook 40, the locking pivot pin member 66, the aperture 68 and the washer 70 form part of a lift mechanism for a part of the seat.

The sacrificial hinge 2 may permit the deceleration and pelvis loads to be at survivable levels during a high gravity event such as occurs as a result of a mine blast attack on the land vehicle, or alternatively a high gravity event on an aircraft such for example as a helicopter crash. The sacrificial hinge enables the occupant of the seat to keep moving even after the initial event has stopped, thus reducing the deceleration forces. Generally, the mechanism may give an extra 30 - 40mm of movement and may be designed to reduce pelvic and spinal deceleration to, for example, under 23g from inputs of, for example, about 1000g to a vehicle structure, which inputs translate to about 100g input to the seat. The extra movement that is permitted by the sacrificial hinge of the invention is what enables injury levels often to be at a survivable level rather than resulting in death to the occupant of the seat.

The sacrificial hinge of the present invention may be light in weight by designed to be stiff during high load events. Such a design gives minimal deflection/movement (elastic and plastic deformation) as the deflection can detract from the sacrificial hinge working efficiently in a seat. Friction within the entire sacrificial hinge arrangement may be minimised with low µ surface finishes on contacting surfaces, permitting parts to slide one against the other without large forces being transferred from one part to the other.

Two sacrificial hinges are employed per seat, with one sacrificial hinge being on either side of the seat. The sacrificial hinge, in addition to its emergency function, is able to act as a normal hinge during everyday use of a seat. The sacrificial hinge thus operate with a dual function.

It is to be appreciated that the embodiment of the invention described above with reference to the accompanying drawings has been given by way of example only and that modifications may be effected. Thus, for example, the deformable means 16 may be for another design of latticed formation, or it may alternatively be another type of deformable construction such for example as a honeycomb construction, a vertical slotted construction, a horizontal slotted construction, or a foam. The deformable construction may be made of aluminium, other metals or plastics materials. The first and second securing means 10, 12 may be of any suitable and appropriate shape for respective securing to the seat portion 6 of the seat 4 and the backrest portion 8 of the seat 4. Individual components shown in the drawings are not limited to use in their drawings and they may be used in other drawings and in all aspects of the invention.

## Claims

1. A sacrificial hinge (2) for a seat (4) for a vehicle wherein
(a) the seat comprises a seat portion (6) and a backrest portion (8); and
(b) the sacrificial hinge comprises:
(i) first securing means (10) for securing to the seat portion;
(ii) second securing means (12) for securing to the backrest portion;
(iii) pivot means (14) for enabling the first securing means to pivot with respect to the second securing means;
(iv) deformable means (16) which is configured for deforming consequent upon the vehicle receiving a blast from a mine, with the deformation enabling the first securing means to move with respect to the second securing means; and
(v) control means (18) for controlling the movement of the first securing means with respect to the second securing means; and(c) the sacrificial hinge being configured such that
(vi) the first securing means pivots with respect to the second securing means about the pivot means in order to allow in use the seat portion to pivot between a horizontal use position and a vertical non-use position;
(vii) the deformable means deforms as a result of forces applied to the sacrificial hinge;
(viii) the deformation of the deformable means enables the seat portion to move downwardly with respect to the backrest portion;
(ix) the downwards movement of the seat portion with respect to the backrest portion is controlled by the control means; **characterised in that** the deformable means is an apertured lattice member; and the deformable means are located in a housing(26).

2. A sacrificial hinge according to claim 1 in which the control means is a hook and catch pin arrangement.

3. A sacrificial hinge according to claim 2 in which the hook is formed by an open slot formation in the first securing means.

4. A sacrificial hinge according to claim 2 or claim 3 in which the catch pin is located on the second securing means.

5. A sacrificial hinge according to any one of the preceding claims in which the first securing means comprises a pair of brackets which sandwich between them the second securing means.

6. A sacrificial hinge according to any one of the preceding claims in which the second securing means is a plate member.

7. A sacrificial hinge according to any one of the preceding claims and including retention means for preventing unwanted deformation of the deformable means.

8. A sacrificial hinge according to claim 7 in which the retention means is a retention clip.

9. A seat for a vehicle, the seat being provided with a sacrificial hinge according to any one of the preceding claims.

## Patentansprüche

1. Opfergelenk (2) für einen Sitz (4) für ein Fahrzeug, wobei
(a) der Sitz einen Sitzabschnitt (6) und einen Rückenlehnenabschnitt (8) aufweist; und
(b) das Opfergelenk aufweist:
(i) ein erstes Befestigungsmittel (10) zum Befestigen an dem Sitzabschnitt;
(ii) ein zweites Befestigungsmittel (12) zum Befestigen an dem Rückenlehnenabschnitt;
(iii) Drehmittel (14), um es dem ersten Befestigungsmittel zu ermöglichen, sich in Bezug auf das zweite Befestigungsmittel zu drehen;
(iv) ein verformbares Mittel (16), welches dafür ausgelegt ist, sich infolge einer von dem Fahrzeug aufgenommenen Explosion einer Mine zu verformen, wobei es dem ersten Befestigungsmittel durch die Verformung ermöglicht wird, sich in Bezug auf das zweite Befestigungsmittel zu bewegen; und
(v) ein Steuermittel (18) zum Steuern der Bewegung des ersten Befestigungsmittels in Bezug auf das zweite Befestigungsmittel; und (c) wobei das Opfergelenk derartig ausgelegt ist, dass:
(vi) sich das erste Befestigungsmittel in Bezug auf das zweite Befestigungsmittel um das Drehmittel dreht, um es dem Sitzabschnitt im Einsatz zu ermöglichen, sich zwischen einer horizontalen Benutzungsstellung und einer vertikalen Stellung der Nichtbenutzung zu drehen;
(vii) sich das verformbare Mittel aufgrund von auf das Opfergelenk aufgebrachten Kräften verformt;
(viii) die Verformung des verformbaren Mittels es dem Sitzabschnitt ermöglicht, sich in Bezug auf den Rückenlehnenabschnitt nach unten zu bewegen;
(ix) die Abwärtsbewegung des Sitzabschnitts in Bezug auf den Rückenlehnenabschnitt durch die Steuermittel gesteuert wird;
**dadurch gekennzeichnet, dass** das verformbare Mittel ein offenes Gitterelement ist; und sich das verformbare Mittel in einem Gehäuse (26) befindet.

2. Opfergelenk nach Anspruch 1, bei welchem das Steuermittel eine Haken- und Rastbolzenanordnung ist.

3. Opfergelenk nach Anspruch 2, bei welchem der Haken von einer offenen Einschnittausbildung in dem ersten Befestigungsmittel gebildet ist.

4. Opfergelenk nach Anspruch 2 oder Anspruch 3, bei welchem sich der Rastbolzen an dem zweiten Befestigungsmittel befindet.

5. Opfergelenk nach einem der vorhergehenden Ansprüche, bei welchem das erste Befestigungsmittel ein Paar Halterungen aufweist, welche zwischen sich das zweite Befestigungsmittel einklemmen.

6. Opfergelenk nach einem der vorhergehenden Ansprüche, bei welchem das zweite Befestigungsmittel ein Plattenelement ist.

7. Opfergelenk nach einem der vorhergehenden Ansprüche, umfassend ein Haltemittel zum Verhindern ungewollter Verformung des verformbaren Mittels.

8. Opfergelenk nach Anspruch 7, bei welchem das Haltemittel eine Halteklammer ist.

9. Sitz für ein Fahrzeug, wobei der Sitz mit einem Opfergelenk nach einem der vorhergehenden Ansprüche versehen ist.

## Revendications

1. Articulation sacrificielle (2) pour un siège (4) de véhicule, dans laquelle
(a) le siège comprend une portion de siège (6) et une portion de dossier (8) ; et
(b) l'articulation sacrificielle comprend :
(i) un premier moyen de fixation (10) pour la fixation à la portion de siège ;
(ii) un deuxième moyen de fixation (12) pour la fixation à la portion de dossier ;
(iii) un moyen de pivotement (14) pour permettre au premier moyen de fixation de pivoter par rapport au deuxième moyen de fixation ;
(iv) un moyen déformable (16), configuré pour se déformer suite à la réception par le véhicule d'une déflagration d'une mine, la déformation permettant au premier moyen de fixation de se déplacer par rapport au deuxième moyen de fixation ; et
(v) un moyen de commande (18) pour commander le mouvement du premier moyen de fixation par rapport au deuxième moyen de fixation ; et (c) l'articulation sacrificielle étant configurée de telle sorte que :
(vi) le premier moyen de fixation pivote par rapport au deuxième moyen de fixation autour du moyen de pivotement afin de permettre, pendant l'utilisation, à la portion de siège de pivoter entre une position d'utilisation horizontale et une position de non-utilisation verticale ;
(vii) le moyen déformable se déforme suite aux forces appliquées à l'articulation sacrificielle ;
(viii) la déformation du moyen déformable permette à la portion de siège de se déplacer vers le bas par rapport à la portion de dossier ;
(ix) le mouvement vers le bas de la portion de siège par rapport à la portion de dossier soit commandé par le moyen de commande ; **caractérisé en ce que** le moyen déformable est un organe de treillis perforé ; et les moyens déformables sont situés dans un boîtier (26).

2. Articulation sacrificielle selon la revendication 1, dans laquelle le moyen de commande est un agencement à crochet et à broche de blocage.

3. Articulation sacrificielle selon la revendication 2, dans laquelle le crochet est formé par une formation à fente ouverte dans le premier moyen de fixation.

4. Articulation sacrificielle selon la revendication 2 ou la revendication 3, dans laquelle la broche de blocage est située sur le deuxième moyen de fixation.

5. Articulation sacrificielle selon l'une quelconque des revendications précédentes, dans laquelle le premier moyen de fixation comprend une paire de consoles qui prennent en sandwich entre elles le deuxième moyen de fixation.

6. Articulation sacrificielle selon l'une quelconque des revendications précédentes, dans laquelle le deuxième moyen de fixation est un organe de plaque.

7. Articulation sacrificielle selon l'une quelconque des revendications précédentes, comportant des moyens de rétention pour empêcher une déformation indésirable des moyens déformables.

8. Articulation sacrificielle selon la revendication 7, dans laquelle le moyen de rétention est une pince de rétention.

9. Siège de véhicule, le siège étant pourvu d'une articulation sacrificielle selon l'une quelconque des revendications précédentes.
